Europäisches Patentamt

European Patent Office

Office européen des brevets

(19)

(11) Publication number: **0 236 946 B1**

# EUROPEAN PATENT SPECIFICATION

(45) Date of publication of patent specification: **21.07.93**   (51) Int. Cl.5: **H04Q 7/04**, H04B 7/26

(21) Application number: **87103112.6**

(22) Date of filing: **05.03.87**

(54) **Mobile receiver unit having function for providing information of electric field intensity.**

(30) Priority: **07.03.86 JP 48543/86**

(43) Date of publication of application:
**16.09.87 Bulletin 87/38**

(45) Publication of the grant of the patent:
**21.07.93 Bulletin 93/29**

(84) Designated Contracting States:
**DE FR GB NL SE**

(56) References cited:
**DE-A- 2 703 491**
**FR-A- 2 349 129**
**US-A- 3 134 104**
**US-A- 3 906 503**
**US-A- 4 177 465**

**PATENT ABSTRACTS OF JAPAN, vol. 7, no.
49 (E-161)[1194], 25th February 1983 & JP-
A-57 199 345**

**PATENT ABSTRACTS OF JAPAN, vol. 8, no.
161 (E-257)[1598], 26th July 1984 & JP-A-59 61
235**

**JAPAN TELECOMMUNICATIONS REVIEW, vol.
27, no. 4, October 1985, pages 245-249, To-
kyo, JP; K. TSUJIMURA: "Detachable mobile**

**radio unit for automobile telephone system"**

(73) Proprietor: **NEC CORPORATION**
**7-1, Shiba 5-chome Minato-ku**
**Tokyo 108-01(JP)**

(72) Inventor: **Yoshihara, Seiichi**
**NEC Corporation 33-1, Shiba 5-chome**
**Minato-ku Tokyo(JP)**

(74) Representative: **Vossius & Partner**
**Siebertstrasse 4 P.O. Box 86 07 67**
**W-8000 München 86 (DE)**

**Description**

The present invention relates to a mobile receiver unit having a function for providing information of an electric field intensity and, more particularly, a mobile receiver unit having a function for providing information of a travel direction to a user who wishes to travel within a service area of a mobile radio telephone system when the user is located outside the mobile service area.

In a conventional mobile receiver unit in a mobile radio telephone system, when an input electric field level is lower than a given level, the mobile receiver unit has a function for displaying that the user is outside the mobile radio telephone system service area, or a function for displaying at best the present level of the electric field intensity. When the user who operates such a mobile receiver unit in the mobile radio telephone system wishes to move in the service area, he cannot know the direction toward which he must travel.

US-A-3 134 104 describes a mobile receiver unit comprising the features of the preamble of claim 1.

It is an object of the present invention to eliminate the conventional disadvantages described above and to provide a mobile receiver unit for providing information of a travel direction to a user who wishes to travel within a service area of a mobile radio telephone system when the user is located outside the mobile service area.

This object is achieved by a unit according to the claims.

In particular, there is provided a receiving unit having a function for providing information of an electric field intensity, comprising receiving means for detecting an electric field intensity and outputting an electric field detection signal, a level detector for outputting a level signal corresponding to an output signal from the receiving means, and means for generating a geographic gradient of an electric field intensity on the basis of an output signal from the level detector and for signalling geographic gradient information to a user. The geographic gradient information signalling means comprises a display means and an acoustic means, both of which indicate a direction of a high electric field intensity.

Fig. 1 is a block diagram of a mobile receiver unit according to an embodiment of the present invention;

Fig. 2 is a flow chart for explaining the operation of the receiver unit shown in Fig. 1;

Figs. 3(a) and 3(b) are timing charts of signals for explaining the operation of the receiver unit shown in Fig. 1;

Fig. 4 is a block diagram of an electric field display in the receiver unit shown in Fig. 1;

Figs. 5A to 5D are front views showing different display panels for the electric field display in the receiver unit of Fig. 1;

Fig. 6 is a block diagram of a mobile receiver unit according to another embodiment of the present invention; and

Fig. 7 is a block diagram of a mobile receiver unit according to still another embodiment of the present invention.

A mobile receiver unit for providing information of an electric field intensity (to be referred to as a receiver unit for brevity hereinafter) according to an embodiment of the present invention will be described.

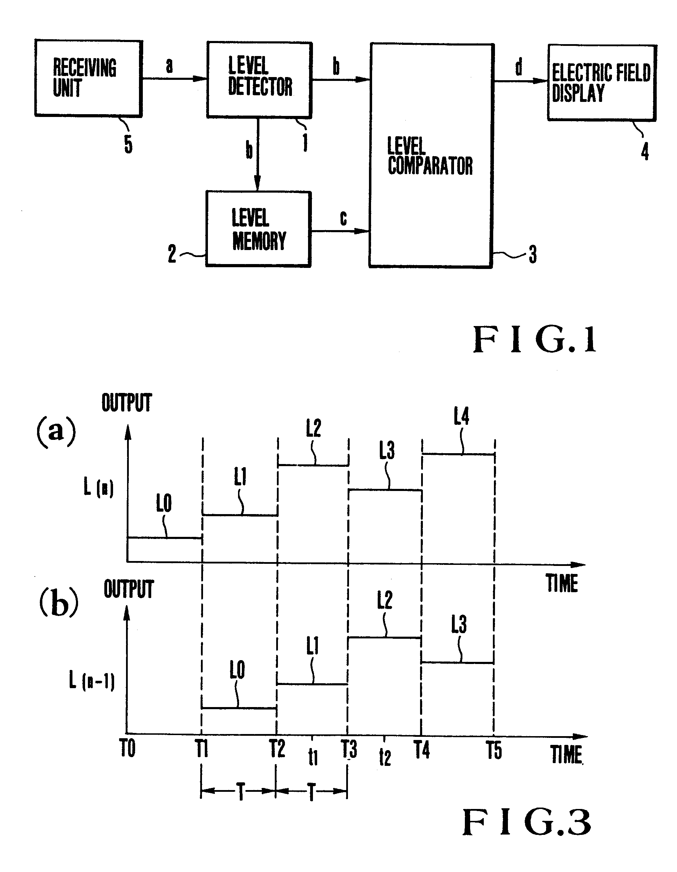

Fig. 1 is a block diagram of a receiver unit according to an embodiment of the present invention.

Referring to Fig. 1, the receiver unit comprises a receiving unit 5 for detecting an electric field intensity and outputting an electric field intensity detection signal a, a level detector 1 for receiving the electric field intensity detection signal a from the receiving unit 5 and outputting an average value signal b representing an average value of the signals a within a predetermined period of time, a level memory 2 for storing the average value signal b from the level detector 1, delaying the average value signal b, and outputting a delayed signal c, a level comparator 3 for receiving the average value signal b from the level detector 1 and the delayed signal c from the level memory 2, detecting a difference between the levels of these input signals, and generating a signal d representing the level difference, and an electric field display 4 for displaying information of an electric field intensity gradation represented by the signal from the comparator 3.

The operation of the receiver unit shown in Fig. 1 will be described below.

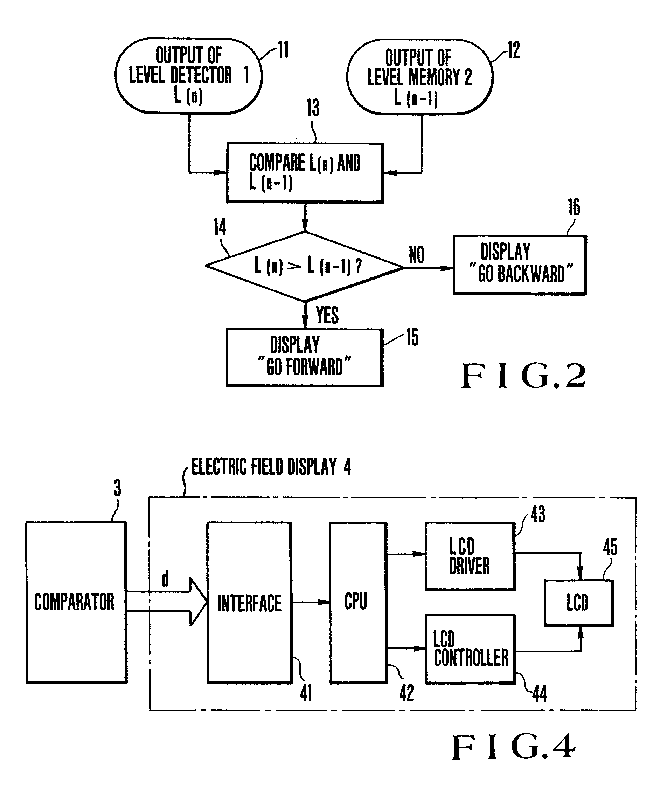

Fig. 2 is a flow chart for explaining the operation of the receiver unit shown in Fig. 1. Figs. 3(a) and 3(b) show waveforms for explaining the output signals from the level detector 1 and the level memory 2 as a function of time. The time interval T between times $T_0$ and $T_1$,... is predetermined.

In step 11 of the flow chart in Fig. 2, a signal L(n) representing the average value of the input signals a between time $T_{n-1}$ and $T_n$ is supplied from the level detector 1 to the level memory 2 and the comparator 3 for a period between time $T_n$ and $T_{n+1}$. The waveform of the signal L(n) is shown in Fig. 3(a). The signal L-(n) represents an average value of the signals a for a period between time $T_n$ and time $T_{n+1}$. For example, the signal L(2) represents an average value of the signals a for a period between time $T_1$ and time $T_2$.

In step 12, the level memory 2 stores the signal L(n) and delays it by a time T, and a delayed signal L-(n-1) is output to the comparator 3. For example, the level memory 2 outputs the signal L(2) for a period between time $T_3$ and time $T_4$. In step 13, the output signal L(n) from the detector 1 is compared by the level comparator 3 with the output signal L(n-1) from the level memory 2. In this case, the signals L(n) and L(n-1) are generated at the same timing. If relation L(n) > L(n-1) is established (e.g., time t1), this indicates that the receiver unit is moving in a direction toward an area where an electric field intensity is higher, i.e., that the receiver unit is moving toward the service area of the mobile radio telephone system. In this case, the flow advances to step 15. Message "GO FORWARD" is indicated in step 15. However, if NO in step 14, message "GO BACKWARD" is indicated in step 15.

Fig. 4 is a circuit diagram of the electric field display 4 shown in Fig. 1. A signal d representing a result of comparison between L(n) and L(n-1) is sent from the level comparator 3 to a central processing unit (CPU) 42 through an interface 41. The CPU 42 sends to an LCD driver 43 and an LCD controller 44 a signal representing a content to be displayed in response to the input signal d. The LCD driver 43 sends a common signal to an LCD 45 in response to the signal from the CPU 42. The LCD controller 44 has a power input terminal and a system clock input terminal and supplies a segment signal to the LCD 45, thereby controlling lighting of the LCD 45.

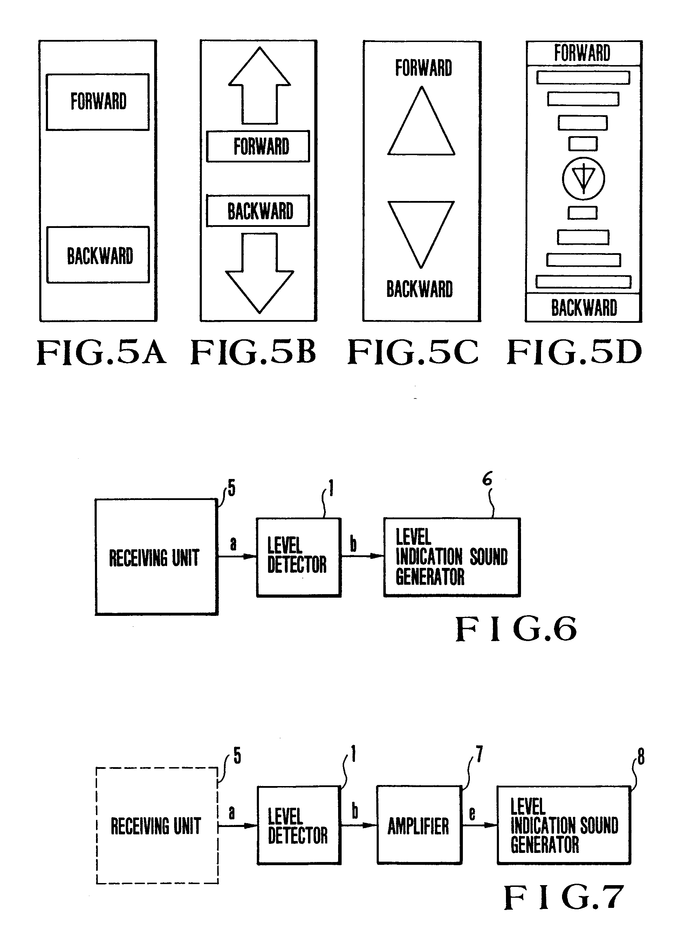

Figs. 5A to 5D show different display panels for the electric field display 4. When the operation in step 15 is executed in the flow chart of Fig. 2, a display element for letters "FORWARD" in each of the display panels in Figs. 5A to 5D is turned on. However, when the operation in step 16 is executed, a display element for letters "BACKWARD" is turned on.

Fig. 6 is a block diagram of a mobile receiver unit according to another embodiment of the present invention. The same reference numerals as in Fig. 1 denote the same parts in Fig. 6. In this embodiment, an average value signal b representing an average value of electric field detection signals a within a given period of time is supplied to a level indication sound generator 6. The level indication sound generator 6 comprises a means for generating a sound whose frequency is changed according to the magnitude of the average value signal b from the level detector 1. The sound generator 6 generates a level indication sound as an electric field intensity proportional to the input electric field intensity.

Table 1 shows the relationship between input electric field levels $E_i$, output voltages $V_i$ from the level detector 1, and level indication sound frequencies $f_i$, wherein $E_{n+1} > E_n$, $V_{n+1} > V_n$, and $f_{n+1} > f_n$.

Table 1

| Input Electric Field Level | $E_0$ or less | $E_0$ to $E_1$ | $E_1$ to $E_2$ | $E_2$ to $E_3$ | $E_{n-1}$ to $E_n$ | $E_n$ to $E_{n+1}$ |
|---|---|---|---|---|---|---|
| Level Detector Output Voltage | $V_0$ | $V_1$ | $V_2$ | $V_3$ | $V_n$ | $V_{n+1}$ |
| Level Indication Sound Frequency | $f_0$ | $f_1$ | $f_2$ | $f_3$ | $f_n$ | $f_{n+1}$ |

If the input electric field level is $E_0$ or less, the frequency of the level indication sound generator 6 is given as $f_0$. In the same manner as described above, the operating conditions are set according to different input electric field levels.

It should be noted that the frequency of the level indication sound generated by the level indication sound generator 6 is increased when the input electric field level is increased. Therefore, when the receiver unit is moved in a direction where the input electric field level is higher, the level indication sound frequency is increased. Otherwise, the level indication sound frequency is decreased. Therefore, the user can know the direction toward which he must travel. However, the above operation can be performed only when the receiver unit is located in an area where the electric field detection signal a from the receiving unit 5 can be output.

Fig. 7 is a block diagram of a mobile receiver unit according to still another embodiment of the present invention. The same reference numerals as in Fig. 6 denote the same parts in Fig. 7.

In the receiving unit shown in Fig. 7, an average value signal b output from a level detector 1 is supplied to an amplifier 7. The amplifier 7 amplifies the average value signal b generated by the level detector 1. An amplified signal e is supplied to a level indication sound generator 8. The sound generator 8 generates a level indication sound whose interruption cycle of a sound having a predetermined frequency is changed on the basis of the signal e from the amplifier 7.

Table 2

| Input Electric Field Level | $E_0$ or less | $E_0$ to $E_1$ | $E_1$ to $E_2$ | $E_2$ to $E_3$ | $E_{n-1}$ to $E_n$ | $E_n$ to $E_{n+1}$ |
|---|---|---|---|---|---|---|
| Level Amplifier Output Voltage | $V_0$ | $V_1$ | $V_2$ | $V_3$ | $V_n$ | $V_{n+1}$ |
| Level Indication Sound Interruption Cycle | $T_0$ | $T_1$ | $T_2$ | $T_3$ | $T_n$ | $T_{n+1}$ |

Table 2 shows the relationship between input electric field levels $E_i$, the output voltages $V_i$ from the amplifier 7, and the interruption cycles $T_i$ of the level indication sound generator 8, wherein $E_{n+1} > E_n$, $V_{n+1} > V_n$, $T_{n+1} > T_n$.

If the input electric field level is $E_0$ or less, the signal level of the amplifier 7 is given as $V_0$ and the interruption cycle of the level indication sound generator 6 is given as $T_0$. In the same manner as described above, the operating conditions are set according to different input electric field levels.

It should be noted that the interruption cycle of the level indication sound generated by the level indication sound generator 6 is decreased when the input electric field level is increased. Therefore, when the receiver unit is moved in a direction toward an area where the input electric field level is higher, the level indication sound interruption cycle is decreased. Otherwise, the level indication sound interruption cycle is increased. Therefore, the user can know the direction toward which he must travel. However, the above operation can be performed only when the receiver unit is located in an area where the electric field detection signal a from the receiving unit 5 can be output.

When the receiver unit according to the present invention as described above is mounted in an automobile, the driver can know the direction of travel according to display or a sound whether or not he is traveling in a direction toward the service area, i.e., a direction toward an area where the electric field level is higher. Even if the user or driver of the mobile radio telephone system is located outside the service area, he can know the direction of the service area.

**Claims**

1. A mobile receiver unit used in a mobile radio telephone system comprising:
   level detector means (1) for detecting an electrical field intensity and outputting a level detection signal (b) representing the electrical field intensity detected at an interval of a predetermined period;
   memory means (2) for receiving the level detection signal (b) from said level detector means (1) to store it for the interval of the predetermined period ; and
   comparator means (3) for comparing a current level detection signal (b) which is directly inputted from said level detection means (1) with a preceding level detection signal (c) which was stored in said memory means (2) before the predetermined period in order to generate a level difference output signal (d);
   characterized by
   means (4;6;7;8) for signalling to a user information representing the direction in which said mobile receiver unit must travel to receive a higher level of the electric field intensity on the basis of said level difference output signal (d) from said comparator means (3).

2. A unit according to claim 1 wherein said signalling means (4;6;7;8) comprises a display means (4) for displaying information indicating the forward or backward direction in which the electrical field intensity becomes higher in accordance with the level detection output signal (d) from said comparator means (3).

3. A unit according to claim 2, wherein said display means (4) comprises a central processing unit (42) for receiving the level detection output signal (d) from said comparative means (3) and for outputting a control signal corresponding to the level detection output signal (d), and information display means (43 - 45) controlled by the controlled signal from said central processing unit (42) for displaying the direction in which the electrical field intensity becomes higher.

4. A unit according to claim 3, wherein said information display means (43 - 45) includes a pattern representing a direction toward which a vehicle must travel, and a light-emitting element (45) for illuminating said pattern.

5. A unit according to claim 4, wherein said light-emitting element (45) includes a liquid crystal display (45).

6. A unit according to claims 1 to 5, wherein said signalling means (4;6;7;8) comprises means (6; 7, 8) for generating a sound whose frequency is changed according to a magnitude of the level detection signal (b) from said level detector means (1).

7. A unit according to claim 6, wherein said sound generating means generates a sound of a pitch proportional to a magnitude of the level detection signal (b) from said level detector means (1).

8. A unit according to claims 1 to 5, wherein said signalling means (4; 6; 7; 8) comprises means (6; 7; 8) for generating a sound whose interruption cycle is changed according to a magnitude of the level detection signal (b) from said level detector means (1).

9. A unit according to claim 8, wherein said sound generating means (6;7;8) generates a sound whose period is inversely proportional to the level detection signal (b) from said level detector means (1).

**Patentansprüche**

1. Mobiles Empfangsgerät zur Verwendung in einem Mobilfunk-Telefonsystem mit:
    einem Pegeldetektor (1) zum Feststellen einer elektrischen Feldstärke und zum Ausgeben eines Pegeldetektorsignals (b), das die in einem vorgegebenen Zeitintervall festgestellte elektrische Feldstärke darstellt;
    einer Speichereinrichtung (2) zum Empfangen des Pegeldetektorsignals (b) vom Pegeldetektor (1), um das Signal für das vorgegebene Zeitintervall zu speichern; und
    einer Vergleichereinrichtung (3) zum Vergleichen eines direkt vom Pegeldetektor (1) eingegebenen aktuellen Pegeldetektorsignals (b) mit einem vor der vorgegebenen Zeitdauer in der Speichereinrichtung (2) gespeicherten vorhergehenden Pegeldetektorsignal (c), um ein Pegeldifferenz-Ausgangssignal (d) zu erzeugen;
    gekennzeichnet durch
    eine Einrichtung (4; 6; 7; 8) zum Anzeigen einer Information für den Benutzer, die auf der Basis des Pegeldifferenz-Ausgangssignals(d) von der Vergleichereinrichtung (3) die Richtung darstellt, in die das mobile Empfangsgerät bewegt werden muß, um einen höheren Pegel der elektrischen Feldstärke zu empfangen.

2. Gerät nach Anspruch 1, wobei die Anzeigeeinrichtung (4; 6; 7; 8) eine Sichtanzeige (4) zum Anzeigen einer Information aufweist, die gemäß dem Pegelerfassungs-Ausgangssignal (d) der Vergleichereinrichtung (3) die Vorwärts- oder Rückwärtsrichtung anzeigt, in der die elektrische Feldstärke zunimmt.

3. Gerät nach Anspruch 2, wobei die Sichtanzeige (4) eine Zentraleinheit (42) zum Empfangen des Pegelerfassungs-Ausgangssignals (d) von der Vergleichereinrichtung (3) und zum Ausgeben eines dem Pegelerfassungs-Ausgangssignal (d) entsprechenden Steuersignals und eine durch das Steuersignal von der Zentraleinheit (42) gesteuerte Informationsanzeigeeinrichtung (43 - 45) zum Anzeigen der Richtung aufweist, in der das elektrische Feld höher wird.

4. Gerät nach Anspruch 3, wobei die Informationsanzeigeeinrichtung (43-45) ein Muster, das eine Richtung darstellt, in die sich ein Fahrzeug bewegen muß, und ein lichtemittierendes Element (45) zum Ausleuchten des Musters aufweist.

5. Gerät nach Anspruch 4, wobei das lichtemittierende Element (45) eine Flüssigkristallanzeige (45) aufweist.

6. Gerät nach den Ansprüchen 1 bis 5, wobei die Anzeigeeinrichtung (4; 6; 7; 8) eine Einrichtung (6; 7; 8) zum Erzeugen eines Tons aufweist, dessen Frequenz gemäß der Höhe des Pegeldetektorsignals (b) vom Pegeldetektor (1) geändert wird.

7. Gerät nach Anspruch 6, wobei die Tonerzeugungseinrichtung einen Ton mit einer zur Stärke des Pegeldetektorsignals (b) vom Pegeldetektor (1) proportionalen Tonhöhe erzeugt.

**8.** Gerät nach den Ansprüchen 1 bis 5, wobei die Anzeigeeinrichtung (4; 6; 7; 8) eine Einrichtung (6; 7; 8) zum Erzeugen eines Tons aufweist, dessen Unterbrechungsperiodendauer gemäß der Stärke des Pegeldetektorsignals (b) vom Pegeldetektor (1) geändert wird.

**9.** Gerät nach Anspruch 8, wobei die Tonerzeugungseinrichtung (6; 7; 8) einen Ton erzeugt, dessen Periode dem Pegeldetektorsignal (b) zum Pegeldetektor (1) umgekehrt proportional ist.

**Revendications**

**1.** Unité de récepteur mobile utilisée dans un système de radiotéléphone mobile comprenant :

un moyen de détecteur de niveau (1) pour détecter une intensité du champ électrique et sortir un signal de détection de niveau (b) représentant l'intensité du champ électrique détectée pendant un intervalle de temps d'une période prédéterminée ;

un moyen de mémoire (2) pour recevoir le signal de détection de niveau (b) provenant du moyen de détecteur de niveau (1) pour le mémoriser pendant l'intervalle de temps de la période prédéterminée, et

un moyen de comparateur (3) pour comparer un signal de détection de niveau actuel (b) qui est directement entré à partir du moyen de détection de niveau (1) à un signal de détection de niveau précédent (c) qui a été mémorisé dans le moyen de mémoire (2) avant l'intervalle de temps prédéterminé afin de produire un signal de sortie de différence de niveaux (d) ;

caractérisée par :

des moyens (4 ; 6 ; 7 ; 8) pour signaler à un utilisateur les informations représentant la direction dans laquelle l'unité de récepteur mobile doit se déplacer pour recevoir un niveau plus élevé de l'intensité de champ électrique sur la base du signal de sortie de différence de niveaux (d) provenant du moyen de comparateur (3).

**2.** Unité selon la revendication 1, dans laquelle les moyens de signalisation (4 ; 6 ; 7 ; 8) comprennent un moyen d'affichage (4) pour afficher des informations indiquant la direction avant ou arrière dans laquelle l'intensité du champ électrique devient plus élevée en conformité avec le signal de sortie de détection de niveaux (d) provenant du moyen de comparateur (3).

**3.** Unité selon la revendication 2, dans laquelle le moyen d'affichage (4) comprend une unité centrale (42) pour recevoir le signal de sortie de détection de niveau (d) à partir du moyen de comparateur (3) et pour sortir un signal de commande correspondant au signal de sortie de détection de niveau (d), et un moyen d'affichage d'information (43 à 45) commandé par le signal commandé provenant de l'unité centrale (42) pour afficher la direction dans laquelle l'intensité du champ électrique devient plus forte.

**4.** Unité selon la revendication 3, dans laquelle le moyen d'affichage d'information (43 à 45) comporte un modèle représentant une direction vers laquelle un véhicule doit se déplacer, et un élément émettant de la lumière (45) pour éclairer le modèle.

**5.** Unité selon la revendication 4, dans laquelle l'élément émettant de la lumière (45) comporte un affichage à cristaux liquides (45).

**6.** Unité selon les revendications 1 à 5, dans laquelle les moyens de signalisation (4 ; 6 ; 7 ; 8) comprennent des moyens (6 ; 7; 8) pour produire un son dont la fréquence est modifiée conformément à l'amplitude du signal de détection de niveau (b) provenant du moyen de détecteur de niveau (1).

**7.** Unité selon la revendication 6, dans laquelle le moyen de génération de son produit un son d'un pas proportionnel à une amplitude du signal de détection de niveau (b) provenant du moyen de détecteur de niveau (1).

**8.** Unité selon les revendications 1 à 5, dans laquelle les moyens de signalisation (4 ; 6 ; 7 ; 8) comprennent des moyens (6 ; 7 ; 8) pour produire un son dont le cycle d'interruption est modifié conformément à l'amplitude du signal de détection de niveau (b) provenant du moyen de détecteur de niveau (1).

9. Unité selon la revendication 8, dans laquelle le moyen de génération de son (6 ; 7 ; 8) produit un son dont la période est inversement proportionnelle au signal de détection de niveau (b) provenant du moyen de détecteur de niveau (1).

**FIG.1**

**FIG.3**

OUTPUT OF
LEVEL DETECTOR 1
L (n)
11

OUTPUT OF
LEVEL MEMORY 2
L (n-1)
12

13

COMPARE L(n) AND
L (n-1)

14

L (n) > L (n-1) ?

NO

DISPLAY
"GO BACKWARD"
16

YES

DISPLAY
"GO FORWARD"
15

F I G.2

ELECTRIC FIELD DISPLAY 4

3

COMPARATOR

d

INTERFACE

CPU

LCD
DRIVER
43

LCD CONTROLLER
44

LCD
45

41

42

F I G.4

9

FORWARD

BACKWARD

## FIG.5A

FORWARD

FORWARD

BACKWARD

## FIG.5B

FORWARD

BACKWARD

## FIG.5C

FORWARD

BACKWARD

## FIG.5D

RECEIVING UNIT → a → LEVEL DETECTOR → b → LEVEL INDICATION SOUND GENERATOR

5     1     6

## F I G.6

RECEIVING UNIT → a → LEVEL DETECTOR → b → AMPLIFIER → e → LEVEL INDICATION SOUND GENERATOR

5     1     7     8

## F I G.7